# EUROPÄISCHE PATENTSCHRIFT

(11) **EP 3 650 326 B1**
(45) Veröffentlichungstag und Bekanntmachung des Hinweises auf die Patenterteilung: **23.03.2022**
(21) Anmeldenummer: 19197080.5
(22) Anmeldetag: 12.09.2019
(51) Int. Cl.: B62M 6/45, B60T 8/17, B62L 3/00

(54) **FAHRRAD MIT ELEKTROANTRIEB MIT VERBESSERTER STABILITÄT**
BICYCLE WITH ELECTRIC DRIVE WITH IMPROVED STABILITY
BICYCLETTE À ENTRAÎNEMENT ÉLECTRIQUE À STABILITÉ AMÉLIORÉE

(30) Priorität: 07.11.2018 DE 102018218969
(43) Veröffentlichungstag der Anmeldung: 13.05.2020
(73) Patentinhaber: Robert Bosch GmbH, 70442 Stuttgart (DE)
(72) Erfinder: Klug, Silas, 71106 Magstadt (DE); Moia, Alessandro, 71088 Holzgerlingen (DE)

(56) Entgegenhaltungen:
- JP-A- 2016 107 738
- JP-A- 2017 226 296
- JP-U- H0 711 466
- US-A- 5 445 443
- US-A1- 2013 090 828
- US-A1- 2015 203 110
- US-A1- 2018 312 218

## Beschreibung

### Stand der Technik

Die vorliegende Erfindung betrifft ein Fahrrad mit Elektroantrieb mit einer verbesserten Antriebssteuerung, um eine Stabilität des Fahrrads, insbesondere bei niedrigen Geschwindigkeiten zu verbessern. Ferner betrifft die vorliegende Erfindung ein Verfahren zum Ansteuern eines elektrischen Antriebs eines Fahrrads, insbesondere zur Verbesserung der Stabilität bei einer langsamen Fahrt.

Fahrräder mit Elektromotor sind beispielsweise als mit Muskelkraft und/oder elektrisch antreibbare Fahrräder, insbesondere Pedelecs oder S-Pedelecs, in unterschiedlichen Ausgestaltungen bekannt. Allgemein können beim Fahrradfahren, insbesondere beim Anfahren und Anhalten problematische Situationen hinsichtlich einer Stabilität des Fahrrads bei zu geringen Geschwindigkeiten auftreten. Bei niedrigen Geschwindigkeiten ist das Fahrrad nicht selbst stabil und benötigt eine sehr gute Handhabung durch den Fahrer, was insbesondere für ältere Menschen oder unerfahrene Fahrer problematisch sein kann. Dies wird noch zusätzlich dadurch erschwert, dass Fahrräder mit Elektromotor grundsätzlich ein etwas höheres Gewicht als Fahrräder ohne elektrischen Antrieb haben. Bei höheren Geschwindigkeiten ist das Fahrrad dann üblicherweise stabil, sodass ein ein Fahrrad und ein Verfahren zum Ansteuern des Antriebs ein solches Fahrrads erfahrungsgemäß einfacher zu halten ist. Das Dokument JP 2016 107738 A zeigt ein Fahrrad gemäß dem Oberbegriff der unabhängigen Ansprüche 1 und 5. Offenbarung der Erfindung

Das erfindungsgemäße mit Muskelkraft und/oder elektrisch antreibbare Fahrrad mit den Merkmalen des Anspruchs 1 weist demgegenüber den Vorteil auf, dass ein elektrischer Antrieb des Fahrrads mittels einer Steuereinrichtung derart ansteuerbar ist, dass eine verbesserte Querstabilität des Fahrrads auch bei niedrigen Geschwindigkeiten möglich ist. Dadurch kann die Sicherheit des Radfahrens mit Fahrräder mit Elektromotor insbesondere beim Anfahren und beim Anhalten deutlich verbessert werden. Hierzu umfasst das Fahrrad einen elektrischen Antrieb zur Fahrunterstützung des Fahrers sowie eine Steuereinrichtung, die eingerichtet ist, den elektrischen Antrieb anzusteuern, um das Fahrrad anzutreiben. Ferner sind eine Einrichtung zur Bestimmung eines Lenkwinkels und eine weitere Einrichtung zur Bestimmung eines Neigungswinkels vorgesehen. Die Steuereinrichtung ist dabei eingerichtet, den Antriebsmoment des elektrischen Antriebs basierend auf dem erfassten Lenkwinkel und dem erfassten Neigungswinkel zu bestimmen. Hierbei ist es vorzugsweise möglich, dass die Steuereinrichtung den elektrischen Antrieb ausschließlich basierend auf dem Lenkwinkel und dem Neigungswinkel ansteuert. Dies ist besonders dann einfach umsetzbar, wenn der elektrische Antrieb am Vorderrad und/oder am Hinterrad des Fahrrads angeordnet ist.

Die Unteransprüche zeigen bevorzugte Weiterbildungen der Erfindung.

Besonders bevorzugt ist die Steuereinrichtung eingerichtet, das Antriebsmoment des elektrischen Antriebs zusätzlich basierend auf einem Tretmoment des Fahrers zu bestimmen. Mit anderen Worten wird das vom elektrischen Antrieb abgegebene Antriebsmoment durch die Einflussgrößen Tretmoment des Fahrers, Lenkwinkel und Neigungswinkel gemeinsam bestimmt. Hierbei kann in Abhängigkeit des Lenkwinkels und/oder Neigungswinkels ein zusätzliches Antriebsmoment zum durch das Tretmoment des Fahrers bestimmten Basismoment addiert oder subtrahiert werden.

Besonders bevorzugt ist dabei ferner eine Einrichtung zur Bestimmung einer Geschwindigkeit des Fahrrads vorgesehen, wobei die Steuereinrichtung das Antriebsmoment des elektrischen Antriebs des Fahrrads dann basierend auf dem Tretmoment des Fahrers, dem Lenkwinkel, dem Neigungswinkel und der Geschwindigkeit bestimmt. Hierbei werden der Lenkwinkel und der Neigungswinkel des Fahrrads nur dann hinzugezogen, wenn die Geschwindigkeit des Fahrrads einen vorbestimmten Schwellenwert unterschreitet. Der Schwellenwert ist vorzugsweise 10 km/h, insbesondere 5 km/h, und besonders bevorzugt 2 km/h. Erst dann wird das Antriebsmoment des elektrischen Antriebs zusätzlich auch durch den Lenkwinkel und den Neigungswinkel bestimmt. Wenn die Geschwindigkeit des Fahrrads größer als der Schwellenwert ist, liegt üblicherweise eine stabile Fahrphase des Fahrrads vor, sodass kein Eingriff basierend auf dem Lenkwinkel und dem Neigungswinkel notwendig ist.

Erfindungsgemäß ist die Einrichtung zur Bestimmung eines Lenkwinkels ein Lenkwinkelsensor. Erfindungsgemäß umfasst die Einrichtung zur Bestimmung des Lenkwinkels einen ersten Drehzahlsensor für eine erste Drehzahl des Vorderrads und einen zweiten Drehzahlsensor für eine zweite Drehzahl des Hinterrads sowie eine Einrichtung zur Erfassung einer Querbeschleunigung und/oder einer Gierrate des Fahrrads. Hierbei ist die Steuereinrichtung dann eingerichtet, den Lenkwinkel basierend auf der ersten und zweiten Drehzahl und der Querbeschleunigung und/oder der Gierrate zu bestimmen. Die alternative Einrichtung zur Bestimmung des Lenkwinkels hat hierbei den Vorteil, dass die notwendigen Sensoren zur Erfassung von Drehzahl, Querbeschleunigung und/oder Gierrate üblicherweise schon an einem Fahrrad mit Elektromotor vorhanden sind, sodass kein zusätzlicher Lenksensor notwendig ist. Dadurch kann die Einrichtung zur Bestimmung des Lenkwinkels sehr kostengünstig umgesetzt werden.

Weiter bevorzugt umfasst das Fahrrad ferner ein ABS-System (Anti-Blockier-System), wobei die Steuereinrichtung eingerichtet ist, in Abhängigkeit des Lenkwinkels und des Neigungswinkels des Fahrrads ein Bremsmoment mittels des ABS-Systems auf das Fahrrad auszuüben. Hierdurch kann beispielsweise realisiert werden, falls ein Fahrer ein zu starkes Tretmoment ausübt und die Steuereinrichtung basierend auf diesem hohen Tretmoment den elektrischen Antrieb zur Abgabe eines hohen Antriebsmoments ansteuern würde, dieses hohe Antriebsmoment wieder etwas zu reduzieren, basierend auf dem Lenkwinkel und dem Neigungswinkel des Fahrrads.

Ferner betrifft die vorliegende Erfindung ein Verfahren zum Ansteuern eines elektrischen Antriebs eines mit Muskelkraft und/oder elektrisch antreibbaren Fahrrads. Das Verfahren umfasst dabei die Schritte des Bestimmens eines Lenkwinkels des Fahrrads, des Bestimmens eines Neigungswinkels des Fahrrads und des Bestimmens eines Antriebsmoments durch den elektrischen Antrieb basierend auf dem Lenkwinkel und/oder dem Neigungswinkel. Vorzugsweise umfasst das Verfahren zusätzlich noch das Bestimmen eines Tretmoments des Fahrers und bestimmt das Antriebsmoment dann basierend auf dem erfassten Tretmoment, dem erfassten Lenkwinkel und dem erfassten Neigungswinkel.

Besonders bevorzugt ist das Verfahren dabei derart ausgestaltet, dass das Antriebsmoment des Fahrrads basierend auf dem Lenkwinkel und dem Neigungswinkel nur bei Unterschreiten einer vorbestimmten Geschwindigkeit des Fahrrads bestimmt wird. Hierdurch wird sichergestellt, dass die Bestimmung des Antriebsmoments basierend auf dem Lenkwinkel und dem Neigungswinkel beispielsweise nur beim Anfahren und/oder Anhalten des Fahrrads ausgeführt wird.

Erfindungsgemäß wird der Lenkwinkel dabei mittels eines Lenkwinkelsensors bestimmt oder der Lenkwinkel wird basierend auf den Drehzahlen des Vorderrads und des Hinterrads und einer Querbeschleunigung und/oder einer Gierrate des Fahrrads bestimmt.

Weiter bevorzugt ist das Verfahren derart ausgestaltet, dass in Abhängigkeit des Lenkwinkels und des Neigungswinkels des Fahrrads ein Bremsmoment auf das Fahrrad ausgeübt wird. Dies wird insbesondere dann ausgeführt, wenn ein Tretmoment des Fahrers einen vorbestimmten Schwellenwert überschreitet, sodass der elektrische Antrieb bei einem zu hohen Tretmoment des Fahrers nicht ein zu hohes zusätzliches Antriebsmoment abgibt.

Gemäß einem alternativen Verfahren der Erfindung ist das Verfahren auch bei einem Fahrrad einsetzbar, welches keinen elektrischen Antrieb, sondern lediglich ein ABS-System zum Bremsen aufweist. Dabei wird gemäß diesem alternativen Verfahren der Lenkwinkel und der Neigungswinkel des Fahrrads bestimmt und basierend auf dem Lenkwinkel und dem Neigungswinkel ein Bremsmoment durch das ABS-System bestimmt.

Kurze Beschreibung der Zeichnungen Nachfolgend wird unter Bezugnahme auf die begleitende Zeichnung ein bevorzugtes Ausführungsbeispiel der Erfindung im Detail beschrieben. In der Zeichnung ist:
- Figur 1: eine schematische Ansicht eines Fahrrads mit elektrischem Antrieb gemäß einem bevorzugten Ausführungsbeispiel der Erfindung.
- Figur 2: eine schematische Draufsicht des Fahrrads zur Verdeutlichung des Lenkwinkels,
- Figur 3: eine schematische Vorderansicht des Fahrrads zur Verdeutlichung des Neigungswinkels, und
- Figur 4: eine schematische Draufsicht des Fahrrads zur Verdeutlichung einer Bestimmung eines Lenkwinkels des Fahrrads, und
- Figur 5: eine schematische Darstellung einer Reglerstruktur gemäß dem Ausführungsbeispiel.

### Bevorzugte Ausführungsform der Erfindung

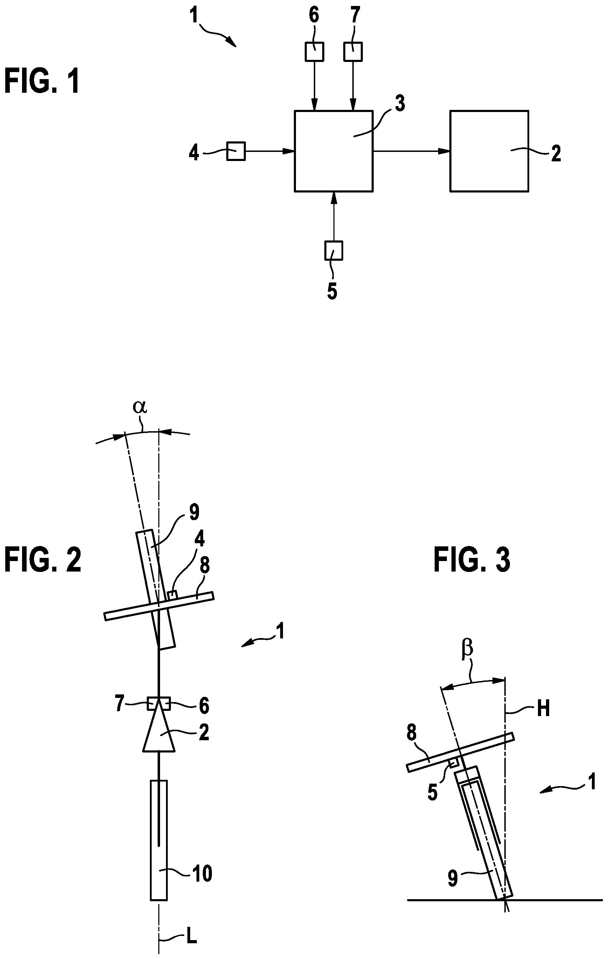

Nachfolgend wird unter Bezugnahme auf die Figuren 1 bis 4 ein Fahrrad 1 gemäß einem bevorzugten Ausführungsbeispiel der Erfindung im Detail beschrieben.

Allgemein sei angemerkt, dass erfindungsgemäß unter dem Begriff Fahrrad sowohl ein normales Fahrrad mit einem Vorderrad und einem Hinterrad als auch beispielsweise ein Fahrrad mit drei oder vier Rädern, beispielsweise ein Lastenrad oder Familienrad oder dergleichen verstanden wird.

Wie aus Figur 1 ersichtlich ist, umfasst das Fahrrad einen elektrischen Antrieb 2 und eine Steuereinrichtung 3. Der elektrische Antrieb 2 kann im Bereich der Tretkurbel des Fahrrads angeordnet sein oder auch am Hinterrad des Fahrrads oder alternativ auch am Vorderrad des Fahrrads angeordnet sein.

Ferner umfasst das Fahrrad 1 einen Drehmomentsensor 6 und einen Geschwindigkeitssensor 7. Die Steuereinrichtung bestimmt hier üblicherweise bei einer normalen Fahrt mit dem Fahrrad, basierend auf dem Tretmoment des Fahrers und/oder einer Geschwindigkeit des Fahrrads und/oder einer Drehzahl der Kurbelwelle ein Antriebsmoment, welches durch den elektrischen Antrieb 2 abgegeben wird und den Fahrer beim Fahren unterstützt.

Ferner umfasst das Fahrrad 1 einen Lenkwinkelsensor 4 und einen Neigungswinkelsensor 5. Wie aus Figur 2 ersichtlich ist, kann der Lenkwinkelsensor 4 einen Lenkwinkel α des Fahrrads 1 bestimmen. Hierbei ist ein Lenker 8, an welchem ein Vorderrad 9 des Fahrrads angeordnet ist, im Winkel α aus einer das Fahrrad 1 umfassenden Längsgerade L abgewinkelt.

Figur 3 zeigt schematisch einen Neigungswinkel β des Fahrrads, welcher mittels des Neigungswinkelsensors 5 erfasst werden kann. Der Neigungswinkel β ist hierbei der Winkel, um welchen das Fahrrad 1 aus einer Hochachse H geneigt ist.

Der Lenkwinkelsensor 4 und der Neigungswinkelsensor 5 sind vorzugsweise am Lenker 8 angeordnet. Es ist jedoch auch möglich, dass insbesondere der Neigungswinkelsensor an einer anderen Position des Fahrrads angeordnet ist. Der Lenkwinkelsensor 4 ist sinnvollerweise am Lenker 8 positioniert.

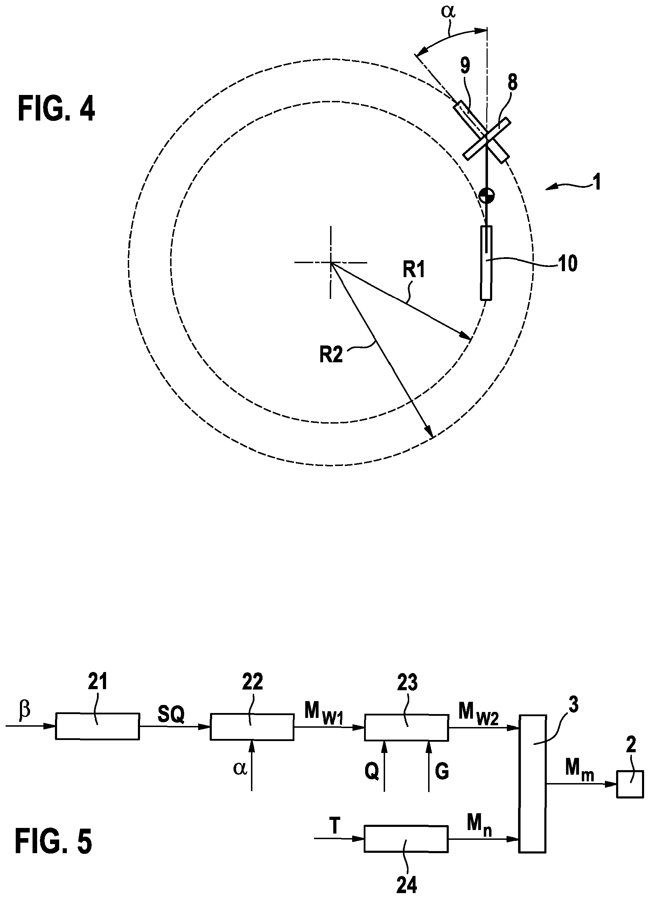

Es sei angemerkt, dass der Lenkwinkel statt unmittelbar mittels eines Lenkwinkelsensors auch mithilfe von Radgeschwindigkeitssensoren erfasst werden kann. Dies ist schematisch in Figur 4 gezeigt.

Figur 4 zeigt eine Draufsicht des Fahrrads 1 mit eingeschlagenem Lenker 8 bei einer langsamen Kurvenfahrt. Wie aus Figur 4 deutlich wird, dreht hierbei das Vorderrad 9 schneller als das Hinterrad 10, und zwar um einen Faktor, welcher lenkwinkelabhängig ist. Je größer hierbei der Lenkwinkel α ist, um so größer ist ein Geschwindigkeitsunterschied zwischen dem Vorderrad 9 und dem Hinterrad 10. Basierend auf dieser Geschwindigkeitsdifferenz zwischen Vorderrad und Hinterrad kann ein Wert für den Lenkwinkel mittels der Steuereinrichtung 3 bestimmt werden. Wenn zusätzlich noch eine Information über eine Querbeschleunigung des Fahrrads und/oder eine Gierrate des Fahrrads um eine Hochachse H bekannt sind, kann zusätzlich ein Vorzeichen des Lenkwinkels bestimmt werden, d. h. ob das Fahrrad nach links oder rechts gelenkt wird.

Erfindungsgemäß kann nun durch die Bestimmung von Lenkwinkel und Neigungswinkel insbesondere bei einer niedrigen Geschwindigkeit des Fahrrads eine Stabilität des Fahrrads verbessert werden, indem insbesondere eine Überlagerung des vom Tretmoment des Fahrers abhängigen Antriebsmoments durch den elektrischen Antrieb 2 erhöht werden. Hierbei kann das Antriebsmoments des elektrischen Antriebs in Abhängigkeit von Neigungswinkel und Lenkwinkel erhöht oder reduziert werden.

Es sei angemerkt, dass das erfindungsgemäße System auch dann eingreifen kann, wenn beispielsweise der Lenkwinkel Null ist, d. h. das Fahrrad geradeaus fährt, und ein Neigungswinkel β einen gefährlichen Wert annimmt, sodass insbesondere bei Unterschreiten eines Schwellenwerts einer Geschwindigkeit, beispielsweise 10 km/h, ein Umfallen des Fahrrads droht. Wenn somit die Steuereinrichtung durch Bestimmung von Neigungswinkel und/oder einer Neigungswinkelgeschwindigkeit erkennt, dass ein unstabiler Fahrzustand vorliegt, kann durch die beschriebene Modulation des Antriebsmoments des elektrischen Antriebs 2 in Abhängigkeit vom Lenkwinkel und insbesondere auch in Abhängigkeit einer Geschwindigkeit des Fahrrads eine Kraft auf den Schwerpunkt des Fahrrads derart ausgeübt werden, dass Schwankungen des Neigungswinkels ausgeglichen werden.

Es sei angemerkt, dass aufgrund des beschriebenen zusätzlichen möglichen Antriebsmoments auf das normale Antriebsmoment basierend auf dem Tretmoment des Fahrers ein Effekt auf eine Längsdynamik des Fahrrads vorhanden ist, sodass ggf. eine Obergrenze für ein zusätzliches Antriebsmoment basierend auf dem Lenkwinkel und dem Neigungswinkel vorgegeben werden muss, um ein unangenehmes Gefühl für den Fahrer des Fahrrads oder ggf. einen Sturz zu vermeiden.

Figur 5 zeigt schematisch eine Reglerstruktur des Fahrrads. Der Neigungswinkel β wird hierbei einem Querkraftregler 21 zugeführt, welcher basierend auf dem Neigungswinkel eine Soll-Querkraft SQ auf einen Schwerpunkt des Fahrrads bestimmt. Diese Soll-Querkraft wird zusammen mit dem Lenkwinkel α einer Recheneinheit 22 zur Bestimmung eines Antriebsmoments MW₁. In einem nächsten Schritt wird in einer Recheneinheit 23 ein Gradient basierend auf einer Querbeschleunigung Q und/oder Gierrate G des Fahrrads bestimmt und überprüft, ob das erste Antriebsmoment MW₁ einen vorbestimmten Schwellenwert überschreitet. Falls dies nicht der Fall ist, wird der Steuereinrichtung 3 das zweite Antriebsmoment MW₂ zugeführt. Dieses wird in der Steuereinrichtung 3 zusammen mit dem normalen Antriebsmoment M_{n'} welches basierend auf dem Tretmoment T des Fahrers mittels einer Recheneinheit 24 bestimmt wird, zu einem Motormoment Mₘ zusammengeführt und dem elektrischen Antrieb 2 zugeführt.

Wenn das Fahrrad ein ABS-System aufweist, kann auch ein Bremsmoment basierend auf dem Lenkwinkel α und dem Neigungswinkel β moduliert werden.

Das erfindungsgemäße Konzept und Verfahren kann hierbei bei Fahrrädern angewandt werden, bei denen der Elektromotor im Bereich der Tretkurbel angeordnet ist (Mittelmotorkonzept) oder auch bei Fahrrädern, bei denen der Elektromotor am Vorderrad oder am Hinterrad oder an beiden angeordnet ist.

Es sei ferner angemerkt, dass insbesondere das Verfahren auch bei Fahrrädern angewandt werden könnte, welche keinen elektrischen Antrieb aufweisen, jedoch mit einem ABS-System ausgestattet sind. Hierbei kann dann durch Bestimmung von Lenkwinkel und Neigungswinkel des Fahrrads ein Bremsmoment bestimmt werden, mit welcher ein Fahrrad bei einem kritischen Fahrzustand bremst.

## Patentansprüche

1. Mit Muskelkraft und/oder elektrisch antreibbares Fahrrad mit
- einem elektrischen Antrieb (2)
- einer Steuereinrichtung (3), welche eingerichtet ist, den elektrischen Antrieb (2) anzusteuern,
- einer Einrichtung (4) zur Bestimmung eines Lenkwinkels und
- einer Einrichtung (5) zur Bestimmung eines Neigungswinkels,
**dadurch gekennzeichnet, dass** das Fahrrad
- eine Einrichtung zur Erfassung einer Querbeschleunigung und/oder eine Einrichtung zur Erfassung einer Gierrate des Fahrrads aufweist,
- wobei die Einrichtung (4) zur Bestimmung eines Lenkwinkels einen ersten Drehzahlsensor für eine erste Drehzahl des Vorderrads und einen zweiten Drehzahlsensor für eine zweite Drehzahl des Hinterrads aufweist und die Steuereinrichtung (3) eingerichtet ist, den Lenkwinkel basierend auf der ersten und zweiten Drehzahl zu bestimmen, und
- wobei die Steuereinrichtung (3) eingerichtet ist, ein Antriebsmoment für den elektrischen Antrieb (2) basierend auf dem Lenkwinkel, dem Neigungswinkel sowie der Querbeschleunigung und/oder der Gierrate zu bestimmen.

2. Fahrrad nach Anspruch 1, wobei die Steuereinrichtung (3) eingerichtet ist,
das Antriebsmoment des elektrischen Antriebs zusätzlich basierend auf einem Tretmoment des Fahrers zu bestimmen.

3. Fahrrad nach Anspruch 2, ferner umfassend eine Einrichtung (7) zur Bestimmung einer Geschwindigkeit des Fahrrads, wobei die Steuereinrichtung (3) das Antriebsmoment des elektrischen Antriebs (2) basierend auf dem Lenkwinkel, dem Neigungswinkel und dem Tretmoment nur dann bestimmt, wenn die Geschwindigkeit des Fahrrads unterhalb eines vorbestimmten Schwellenwerts liegt.

4. Fahrrad nach einem der vorhergehenden Ansprüche, ferner umfassend ein ABS-System, wobei die Steuereinrichtung (3) eingerichtet ist, in Abhängigkeit des Lenkwinkels (a) und des Neigungswinkels (β) ein Bremsmoment mittels des ABS-Systems auf das Fahrrad auszuüben.

5. Verfahren zum Ansteuern eines elektrischen Antriebs (2) eines mit Muskelkraft und/oder elektrisch antreibbaren Fahrrads (1), umfassend die Schritte:
- Bestimmen eines Lenkwinkels (a) des Fahrrads,
- Bestimmen eines Neigungswinkels (β) des Fahrrads, und
- Bestimmen eines Antriebsmoments für den elektrischen Antrieb (2), basierend auf dem Lenkwinkel (a) und dem Neigungswinkel (β),
**dadurch gekennzeichnet, dass** der Lenkwinkel (a) basierend auf einem ersten Drehzahlsensor für eine erste Drehzahl des Vorderrads und einem zweiten Drehzahlsensor für eine zweite Drehzahl des Hinterrads bestimmt wird und eine Querbeschleunigung und/oder Gierrate des Fahrrads zur Bestimmung des Antriebsmoments hinzugenommen wird.

6. Verfahren nach Anspruch 5, wobei das Antriebsmoment des elektrischen Antriebs (2) zusätzlich noch durch einen Tretmoment des Fahrers bestimmt wird.

7. Verfahren nach Anspruch 5 oder 6, wobei das Antriebsmoment des elektrischen Antriebs (2) basierend auf dem Lenkwinkel (a) und dem Neigungswinkel (β) nur bei Unterschreiten einer vorbestimmten Geschwindigkeit des Fahrrads bestimmt wird.

8. Verfahren nach einem der Ansprüche 5 bis 7, wobei in Abhängigkeit des Lenkwinkels (a) und des Neigungswinkels (β) des Fahrrads ein Bremsmoment auf das Fahrrad mittels eines ABS-Systems ausgeübt wird.

## Claims

1. Bicycle that can be driven by muscle power and/or electrically, having
- an electric drive (2),
- a control device (3) that is configured to control the electric drive (2),
- a device (4) for determining a steering angle, and
- a device (5) for determining a tilt angle, **characterized in that** the bicycle
- has a device for detecting a lateral acceleration and/or a device for detecting a yaw rate of the bicycle,
- wherein the device (4) for determining a steering angle has a first rotational speed sensor for a first rotational speed of the front wheel and a second rotational speed sensor for a second rotational speed of the rear wheel, and the control device (3) is configured to determine the steering angle on the basis of the first and the second rotational speed, and
- wherein the control device (3) is configured to determine a drive torque for the electric drive (2) on the basis of the steering angle, the tilt angle and the lateral acceleration and/or the yaw rate.

2. Bicycle according to Claim 1, wherein the control device (3) is configured to determine the drive torque of the electric drive additionally on the basis of a pedalling torque of the rider.

3. Bicycle according to Claim 2, furthermore comprising a device (7) for determining a speed of the bicycle, wherein the control device (3) determines the drive torque of the electric drive (2) on the basis of the steering angle, the tilt angle and the pedalling torque only if the speed of the bicycle lies below a predetermined threshold value.

4. Bicycle according to any one of the preceding claims, furthermore comprising an ABS system, wherein the control device (3) is configured to exert a braking torque on the bicycle by means of the ABS system in a manner dependent on the steering angle (α) and the tilt angle (β).

5. Method for controlling an electric drive (2) of a bicycle (1) which can be driven by muscle power and/or electrically, comprising the steps:
- determining a steering angle (α) of the bicycle,
- determining a tilt angle (β) of the bicycle, and
- determining a drive torque for the electric drive (2) on the basis of the steering angle (α) and the tilt angle (β),
**characterized in that** the steering angle (α) is determined on the basis of a first rotational speed sensor for a first rotational speed of the front wheel and a second rotational speed sensor for a second rotational speed of the rear wheel, and a lateral acceleration and/or yaw rate of the bicycle is taken into consideration for the determination of the drive torque.

6. Method according to Claim 5, wherein the drive torque of the electric drive (2) is determined additionally using a pedalling torque of the rider.

7. Method according to Claim 5 or 6, wherein the drive torque of the electric drive (2) is determined on the basis of the steering angle (α) and the tilt angle (β) only if a predetermined speed of the bicycle is undershot.

8. Method according to any one of Claims 5 to 7, wherein a braking torque is exerted on the bicycle by means of an ABS system in a manner dependent on the steering angle (α) and the tilt angle (β) of the bicycle.

## Revendications

1. Bicyclette pouvant être entraînée par la force musculaire et/ou de manière électrique, comprenant
- un système d'entraînement électrique (2),
- un dispositif de commande (3) qui est conçu pour piloter le système d'entraînement électrique (2),
- un dispositif (4) servant à déterminer un angle de direction, et
- un dispositif (5) servant à déterminer un angle d'inclinaison,
**caractérisée en ce que** la bicyclette présente
- un dispositif servant à détecter une accélération transversale, et/ou un dispositif servant à détecter un taux de lacet de la bicyclette,
- le dispositif (4) servant à déterminer un angle de direction présentant un premier capteur de vitesse de rotation pour une première vitesse de rotation de la roue avant et un deuxième capteur de vitesse de rotation pour une deuxième vitesse de rotation de la roue arrière, et le dispositif de commande (3) étant conçu pour déterminer l'angle de direction sur la base de la première et de la deuxième vitesse de rotation, et
- le dispositif de commande (3) étant conçu pour déterminer un couple d'entraînement pour le système d'entraînement électrique (2) sur la base de l'angle de direction, de l'angle d'inclinaison ainsi que de l'accélération transversale et/ou du taux de lacet.

2. Bicyclette selon la revendication 1, dans laquelle le dispositif de commande (3) est conçu pour déterminer le couple d'entraînement du système d'entraînement électrique en plus sur la base d'un couple de pédalage du cycliste.

3. Bicyclette selon la revendication 2, comprenant en outre un dispositif (7) servant à déterminer une vitesse de la bicyclette, le dispositif de commande (3) ne déterminant le couple d'entraînement du système d'entraînement électrique (2) sur la base de l'angle de direction, de l'angle d'inclinaison et du couple de pédalage que si la vitesse de la bicyclette est située au-dessous d'une valeur seuil prédéterminée.

4. Bicyclette selon l'une quelconque des revendications précédentes, comprenant en outre un système ABS, le dispositif de commande (3) étant conçu pour exercer sur la bicyclette un couple de freinage au moyen du système ABS, en fonction de l'angle de direction (α) et de l'angle d'inclinaison (β).

5. Procédé permettant de piloter un système d'entraînement électrique (2) d'une bicyclette (1) pouvant être entraînée par la force musculaire et/ou de manière électrique, comprenant les étapes consistant à :
- déterminer un angle de direction (a) de la bicyclette,
- déterminer un angle d'inclinaison (β) de la bicyclette, et
- déterminer un couple d'entraînement pour le système d'entraînement électrique (2) sur la base de l'angle de direction (α) et de l'angle d'inclinaison (β),
**caractérisé en ce que** l'angle de direction (a) est déterminé sur la base d'un premier capteur de vitesse de rotation pour une première vitesse de rotation de la roue avant et d'un deuxième capteur de vitesse de rotation pour une deuxième vitesse de rotation de la roue arrière, et une accélération transversale et/ou un taux de lacet de la bicyclette servant à déterminer le couple d'entraînement sont ajoutés.

6. Procédé selon la revendication 5, dans lequel le couple d'entraînement du système d'entraînement électrique (2) est en outre également déterminé par un couple de pédalage du cycliste.

7. Procédé selon la revendication 5 ou 6, dans lequel le couple d'entraînement du système d'entraînement électrique (2) n'est déterminé sur la base de l'angle de direction (α) et de l'angle d'inclinaison (β) qu'en cas de dépassement d'une vitesse prédéterminée de la bicyclette.

8. Procédé selon l'une quelconque des revendications 5 à 7, dans lequel, en fonction de l'angle de direction (α) et de l'angle d'inclinaison (β) de la bicyclette, un couple de freinage est exercé sur la bicyclette au moyen d'un système ABS.
